# EUROPEAN PATENT SPECIFICATION

(11) **EP 2 283 452 B1**
(45) Date of publication and mention of the grant of the patent: **17.12.2014**
(21) Application number: 09734081.4
(22) Date of filing: 22.04.2009
(51) Int. Cl.: G06K 7/00, G06F 21/00

(54) **RFID READER, RFID TAG, AND CONTROLLING METHOD THEREOF**
RFID-LESER, RFID-ETIKETT UND STEUERVERFAHREN DAFÜR
LECTEUR RFID, MARQUEUR RFID, ET LEUR PROCÉDÉ DE COMMANDE

(30) Priority: 22.04.2008 KR 20080037295
(43) Date of publication of application: 16.02.2011
(73) Proprietor: Electronics and Telecommunications Research Institute, Daejeon 305-700 (KR); Cisc Semiconductor Design+Consulting GmbH, 9020 Klagenfurt (AT)
(72) Inventor: KIM, Hyunseok, Daejeon 305-700 (KR); LEE, Heyung Sub, Daejeon 305-700 (KR); LEE, Sang Yeoun, Daejeon 305-700 (KR); SHIN, Dong-Beom, Daejeon 305-700 (KR); CHOI, Su Na, Daejeon 305-700 (KR); SEONG, Nak Seon, Daejeon 305-700 (KR); PYO, Cheol Sig, Daejeon 305-700 (KR); CHAE, Jong-Suk, Daejeon 305-700 (KR); PREISHUBER-PFLUEGL, DI Josef, A-9020 Klagenfurt (AT); Janek, DI Alex, A-9020 Klagenfurt (AT); Tschische, DI David, 9020 Klagenfurt (AT)
(74) Representative: Betten & Resch
(86) International application number: PCT/KR2009/002109
(87) International publication number: WO 2009/131381

(56) References cited:
- WO-A1-00/45331
- WO-A1-03/098175
- WO-A2-2006/056911
- KR-A- 20080 004 801
- US-A1- 2005 192 727
- US-A1- 2007 285 238

## Description

### Technical Field

Example embodiments relate to a radio frequency identification (RFID) reader, an RFID tag, and a controlling method thereof, and more particularly, to an RFID tag that is selectively activated depending on an inner state, an RFID reader to selectively activate the RFID tag, and a controlling method thereof.

### Background Art

A radio frequency identification (RFID) system includes an RFID reader and an RFID tag, and each of the RFID reader and the RFID tag includes an antenna. The RFID reader and the RFID tag perform transmission/reception of data using wireless radio waves.

Prior to transmission/reception of the data, the RFID reader transmits a signal, namely, an activation command to activate or to wake up the RFID tag, to the RFID tag via an antenna. When the RFID tag is activated in response to the activation command, the RFID tag transmits stored data to the RFID reader via the antenna.

An RFID sensor tag is a battery assisted passive tag, and contains a separate battery unlike a general passive tag. The battery of the RFID sensor tag is used for driving an inner circuit of the RFID tag.

The RFID sensor tag may be used for various fields depending on a type of sensor contained therein. As an example, the RFID sensor tag containing a temperature sensor may be used for managing blood donations, food, an animal/plant environment, logistics/distributions, and the like.

To reduce power consumption, the RFID sensor tag remains in a sleep mode where most of a circuit in the RFID sensor tag is in an inactivation state, namely, an hibernate state, until receiving the activation command from the RFID reader, and upon the reception of the activation command, the RFID tag is entirely activated in a relatively short time and operates.

However, a conventional RFID sensor tag is activated in response to the activation command even when valid sensing data to be transmitted to the RFID reader, such as a temperature value over a predetermined threshold, is not stored in a memory contained in the RFID sensor tag, thereby unnecessarily expending a battery.

Document WO0045331 A1 discloses a method and an apparatus for reporting dynamic properties of a product using radio frequency identification device technology. An electronic tag is equipped with a sensor which determines dynamic properties of a product when the tag is activated. The dynamic properties of the product are then further processed into other dynamic properties. In any event either the former or the latter dynamic properties are then transmitted from the tag. Such dynamic properties could be the temperature of a product or the expiration date of the product derived from periodic measurements of the temperature of the product.

### Disclosure of Invention

### Technical Problem

Example embodiments may provide a radio frequency identification (RFID) tag that is selectively activated depending on an inner state of the RFID tag, an RFID reader to selectively activate the RFID tag, and a controlling method thereof.

### Technical Solution

According to example embodiments, there may be provided an RFID tag including a state information generator to generate state information of the RFID tag, a receiver to receive an activation command including reference state information of the RFID tag, and a controller to activate the RFID tag based on the state information and the reference state information.

In this instance, the RFID tag may further include a sensor to generate at least one sensing data by sensing an environmental factor around the RFID tag, wherein the state information includes information with respect to whether valid sensing data to be transmitted to the RFID reader exists in the at least one sensing data.

Also, the RFID tag may further include a memory unit to store the sensing data, wherein the error state information includes information with respect to a remaining capacity of the memory unit.

According to example embodiments, there may be provided an RFID reader including a command generator to generate an activation command for activating an RFID tag, and a transmitter to transmit the activation command to the RFID tag, wherein the activation command includes reference state information of the RFID tag.

According to example embodiments, there may be provided a method of controlling an RFID tag, the method including generating state information of the RFID tag, receiving, from an RFID reader, an activation command including reference state information of the RFID tag, and activating the RFID tag based on the state information and the reference state information.

According to example embodiments, there may be provided a method of controlling an RFID reader, the method including generating an activation command for activating an RFID tag, and transmitting the activation command to the RFID tag, wherein the activation command includes reference state information of the RFID tag.

Additional aspects and/or advantages will be set forth in part in the description which follows and, in part, will be apparent from the description, or may be learned by practice of the embodiments.

### Brief Description of Drawings

These and/or other aspects and advantages will become apparent and more readily appreciated from the following description of the embodiments, taken in conjunction with the accompanying drawings of which:
FIG. 1 is a block diagram illustrating a detailed configuration of an RFID system according to example embodiments;
FIG. 2 illustrates an example of state information of an RFID tag;
FIG. 3 illustrates an example of an activation mask transmitted to an RFID tag from an RFID reader;
FIG. 4 is a flowchart illustrating a method of controlling an RFID tag according to example embodiments; and
FIG. 5 is a flowchart illustrating a method of controlling an RFID reader according to example embodiments.

### Mode for the Invention

Reference will now be made in detail to example embodiments, examples of which are illustrated in the accompanying drawings, wherein like reference numerals refer to the like elements throughout. Example embodiments are described below to explain the present disclosure by referring to the figures.

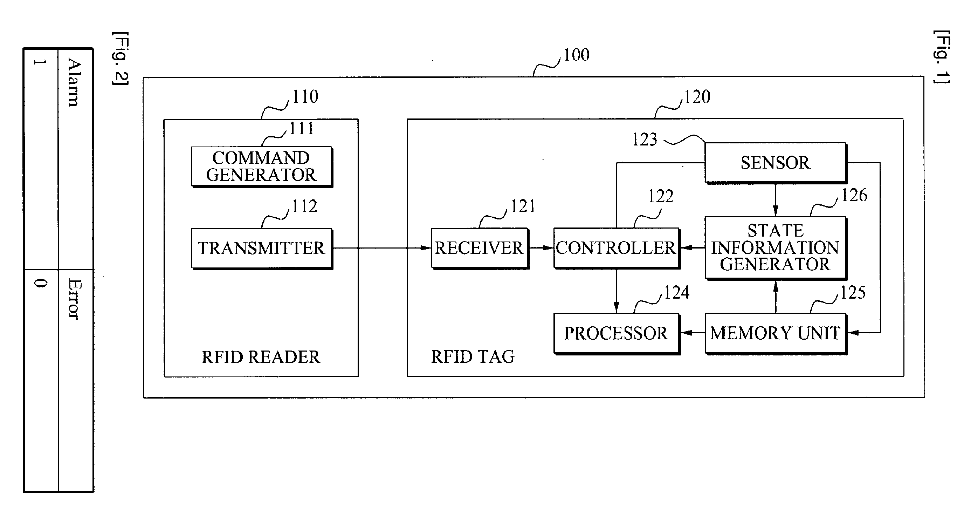

FIG. 1 is a block diagram illustrating a detailed configuration of a radio frequency identification (RFID) system according to example embodiments.

According to example embodiments, the RFID system 100 includes an RFID reader 110 and an RFID tag 120. Also, according to example embodiments, the RFID reader 110 includes a command generator 111 and a transmitter 112, and the RFID tag 120 includes a receiver 121, a controller 122, a sensor 123, a processor 124, a memory unit 125, and a state information generator 126. Hereinafter, a function of each element will be described.

The RFID reader 110 transmits the RFID tag 120 by generating an activation command. The activation command is generated by the command generator 111, and the generated activation command is transmitted to the RFID tag 120 via the transmitter 112.

The activation command includes an activation mask, and the activation mask corresponds to an activation code included in the RFID tag 120 to be activated. The activation code is for classifying the RFID tag 120 and a value of the activation code may be different for each object having the RFID tag 120 attached.

That is, to obtain information with respect to the object, the RFID reader 110 generates an activation mask corresponding to an activation code assigned to an object and generates an activation command including the activation mask to transmit to the RFID tag 120.

The RFID tag 120 that receives the activation command compares the activation mask with the activation code contained in the RFID tag 120 and activates itself only when the activation mask matches the activation code. As an example, if the activation mask and the activation code have the same data structure, the RFID tag 120 is activated only when the activation mask is identical with the activation code. The activation command is received by the receiver 121, and the RFID tag 120 is activated by the controller 122 through a comparison of the activation mask with the activation code. Here, the controller 122 may correspond to a wake up decoder included in a general RFID tag.

When the RFID tag 120 is activated, the RFID reader 110 may transmit a data transmission command to the RFID tag 120. The RFID tag 120 that receives the data transmission command transmits stored data to the RFID reader 110.

A portion of data of the data stored in the RFID tag 120 may be sensing data obtained by sensing an environmental factor around the RFID tag 120. As an example, the RFID tag 120 may generate temperature data by sensing temperature around the RFID tag 120 and may store the generated temperature data. The environmental factor may be sensed by the sensor 123 and sensing data is processed by the processor 124. Also, the sensing data may be stored in a memory unit 125.

At least one sensing data is classified into valid sensing data and invalid sensing data. The valid sensing data is sensing data to be transmitted to the RFID reader 110 when the data transmission command is received, and the invalid sensing data is data that is not to be transmitted to the RFID reader 110 even though the data transmission command is received. The valid sensing data and the invalid sensing data may be classified based on a value of a predetermined sensing data. As an example, in a case that the sensing data is temperature data and the RFID reader 110 is required to receive temperature data having a temperature value greater than a predetermined temperature value, the valid sensing data is temperature data having a temperature value greater than the predetermined temperature value and the invalid sensing data is temperature data having a temperature value less than or equal to the predetermined temperature value.

In this instance, when only the invalid sensing data is stored in the RFID reader 110, the RFID tag 120 does not need to activate itself even though the activation command is received since the RFID tag 120 does not need to transmit the sensing data to the RFID reader 110. However, in a conventional art, the RFID tag 120 may be activated in response to the received activation command, thereby unnecessarily expending power. That is, according to the conventional art, the RFID tag 120 is activated regardless of an inner state, thereby unnecessarily expending power.

The RFID system 100 according to example embodiments selectively activates the RFID tag 120 depending on a state of the RFID tag 120 to prevent unnecessary power consumption.

To achieve the above, the RFID reader 110 according to example embodiments transmits, to the RFID tag 120, an activation command including reference state information of the RFID tag 120. The activation command including the reference state information is also generated by the command generator 111.

The RFID tag 120 that receives the activation command compares the reference state information included in the activation command with state information, and activates itself in response to the activation command only when the reference state information matches state information. The state information is generated by the state information generator 126.

According to example embodiments, the state information may include information with respect to whether the valid sensing data exists in at least one sensing data stored in the memory unit 125.

As described above, the RFID tag 120 may not need to be activated when the valid sensing data does not exist in the at least one sensing data, and thus, the state information may include information with respect to whether the valid sensing data exists.

In this instance, the information with respect to whether the valid sensing data exists may be generated based on a value of predetermined sensing data.

As an example, when the sensing data is temperature data and the RFID reader 110 requires to receive temperature data having a temperature value greater than a predetermined temperature value, the state information generator 126 may generate the state information by determining whether sensing data is a temperature value greater than a predetermined temperature value.

According to example embodiments, the information with respect to whether the valid sensing data exists may be expressed as one bit. As an example, when the valid sensing data exists, the bit may have a value, '1', and when the valid sensing data does not exist, the bit may have a value, '0'.

Also, according to example embodiments, the state information may include error state information with respect to an error occurring in the RFID tag 120.

The above is based on a fact that the RFID tag 120 may need to be activated to process the error, when the error occurs in the RFID tag 120.

In this instance, the error state information may include information with respect to remaining capacity of the memory unit 125.

The above is based on a fact that, when the remaining capacity of the memory unit 125 is insufficient, the RFID tag 120 may need to perform a data processing operation, such as transmitting stored sensing data to the RFID reader 110 and deleting the corresponding sensing data, and the like, and the RFID 120 may need to be in an activation state to process the data processing operation.

As with the information with respect to whether the valid sensing data exists, the error state information may also be expressed as one bit. In a case that the error state information includes the information with respect to remaining capacity of the memory unit 125, when there is sufficient remaining capacity in the memory unit 125, the bit may have a value, '0', and when there is insufficient remaining capacity in the memory unit 125, the bit may have a value, '1'.

The RFID tag 120 may determine whether to activate itself by determining whether the described state information matches the reference state information included in the activation command.

According to example embodiments, the reference state information may be included in the activation mask or may be included in the activation code. In this instance, if the activation mask and the activation code have the same data structure, the RFID tag 120 is activated only when the activation mask is identical with the activation code.

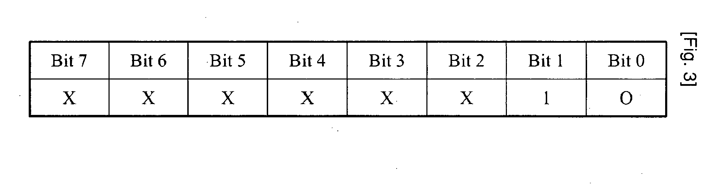

Hereinafter, an example of the state information of the RFID tag 120 and reference state information will be described with reference to FIGS. 2 and 3. Here, it is assumed that the activation mask and the activation code have the same data structure.

FIG. 2 illustrates an example of state information of an RFID tag.

It is assumed that the state information of FIG. 2 includes both information with respect to whether valid sensing data exists and error state information that includes all information with respect to remaining capacity of a memory unit 150, and the state information included in the state information.

In this instance, the state information may include a first bit representing information with respect to whether the valid sensing data exists and a second bit representing the error state information. An 'Alarm' bit and 'Error' bit respectively correspond to the first bit and the second bit.

As an example, an 'Alarm' bit having a value, '1', signifies that the valid sensing data exists, and an 'Alarm' bit having a value, '0', signifies that the valid sensing data does not exist. Also, an 'Error' bit having a value, '1', signifies that an error occurs in the RFID tag 120, and an 'Error' bit having a value, '0', signifies that an error does not occur in the RFID tag 120.

FIG. 3 illustrates an example of an activation mask transmitted to an RFID tag from an RFID reader.

The activation mask is composed of eight bits. Here, six upper bits, namely, Bit 7 through Bit 2, may indicate an activation code corresponding to an object where the RFID tag 120 is attached or may indicate a portion of the activation code, and two lower bits, namely, Bit 1 and Bit 0 may indicate reference state information.

The RFID tag 120 that receives an activation command including the activation mask illustrated in FIG. 3 compares reference state information in the activation mask with state information of FIG. 2, and when the reference state information is identical with the portion of the state information or when the reference state information is identical with the entire state information, the RFID tag 120 may activate itself.

As an example, to activate the RFID tag 120 based on only information with respect to whether valid sensing data exists in the RFID tag 120, the RFID tag 120 compares a bit value of 'Bit 1' of the activation mask with a bit value of 'Alarm' in the activation code, and when the bit values are identical with each other, the RFID tag 120 activates itself.

As another example, to activate the RFID tag 120 based on only error state information of the RFID tag 120, the RFID tag 120 compares a bit value of 'Bit 0' of the activation mask with a bit value of 'Error' in the activation code, and when the bit values are identical with each other, activates itself.

As another example, to activate the RFID tag 120 based on both the information whether valid sensing data exists in the RFID tag 120 and the error state information of the RFID tag 120, the RFID tag 120 activates itself when the bit value of 'Bit 1' of the activation mask and the bit value of 'Alarm' in the activation code are identical with each other, and when the bit value of 'Bit 0' of the activation mask and the bit value of 'Error' in the activation code are identical with each other.

As described above, the RFID system 100 selectively activates the RFID tag 120 depending on a state of the RFID tag 120 using the state information and the reference state information, thereby reducing unnecessary power consumption.

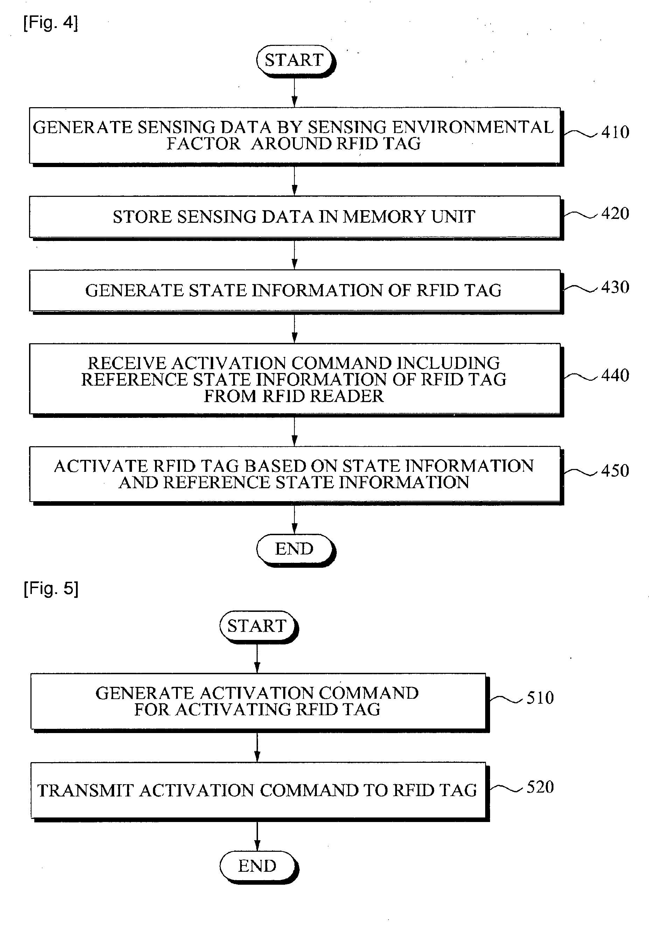

FIG. 4 is a flowchart illustrating a method of controlling an RFID tag according to example embodiments. Hereinafter, operations of controlling an RFID tag will be described in detail.

In operation 410, sensing data is generated by sensing an environmental factor around the RFID tag. As an example, the sensing data may correspond to temperature data and humidity data.

In operation 420, the sensing data is stored in a memory unit of the RFID tag. In this instance, at least one sensing data may be stored.

In operation 430, state information of the RFID tag is generated.

According to example embodiments, the state information may include information with respect to whether valid sensing data to be transmitted to the RFID reader exists in the at least one sensing data. In this instance, the information with respect to whether valid sensing data exists may be generated based on a value of predetermined sensing data.

Also, according to example embodiments, the state information may include error state information with respect to an error occurring in the RFID tag. In this instance, the error state information may include information with respect to remaining capacity of a memory unit in the RFID tag.

Also, according to example embodiments, the state information may include a first bit representing information with respect to whether valid sensing data exists and a second bit representing error state information, and the state information may be included in the activation code.

In operation 440, an activation command including reference state information of the RFID tag is received from the RFID reader.

In operation 450, the RFID tag activates itself based on a comparison between the state information and reference state information.

FIG. 5 is a flowchart illustrating a method of controlling an RFID reader according to example embodiments. Hereinafter, operations of controlling an RFID reader will be described in detail.

In operation 510, an activation command is generated for activating an RFID tag.

In this instance, the activation command may include reference state information of the RFID tag.

According to example embodiments, the reference state information may include information with respect to whether valid sensing data to be transmitted to the RFID reader exists in sensing data stored in the RFID tag and may include error state information with respect to an error occurring in the RFID tag. Also, the reference state information may be included in an activation mask of the activation command.

In operation 520, the generated activation command is transmitted to the RFID tag.

A few example embodiments of the RFID tag controlling method and the RFID reader controlling method have been shown and described, and a configuration of the RFID system described in FIG. 1 is applicable to the present example embodiment. Accordingly, detailed descriptions thereof will be omitted.

The method according to the above-described example embodiments may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Although a few example embodiments have been shown and described, it would be appreciated by those skilled in the art that changes may be made in these example embodiments without departing from the principles of the invention, the scope of which is defined in the claims and their equivalents.

## Claims

1. An RFID tag (120), comprising:
a state information (126) generator to generate state information of the RFID tag (120);
a receiver (121) to receive an activation command including reference state information of the RFID tag -120); and
a controller (122) to activate the RFID tag (120) based on the state information and the reference state information.

2. The RFID tag (120) of claim 1, wherein the controller (122) is adapted to activate the RFID tag (120) when the state information matches the reference state information.

3. The RFID tag (120) of claim 1, further comprising:
a sensor (123) to generate at least one sensing data by sensing an environmental factor around the RFID tag (120),
wherein the state information includes information with respect to whether valid sensing data to be transmitted to an RFID reader (110) exists in the at least one sensing data.

4. The RFID tag (120) of claim 3, wherein the information with respect to whether valid sensing data exists is generated based on a predetermined sensing data value.

5. The RFID tag (120) of claim 1, wherein the state information includes error state information with respect to an error occurring in the RFID tag (120).

6. The RFID tag (120) of claim 5, further comprising a memory unit (125) to store the sensing data,
wherein the error state information includes information with respect to a remaining capacity of the memory unit (125).

7. The RFID tag (120) of claim 3, wherein the state information includes a first bit representing information with respect to whether the valid sensing data exists and also includes a second bit representing the error state information with respect to an error occurring in the RFID tag (120).

8. The RFID tag (120) of claim 1, wherein the state information is included in an activation code stored in the RFID tag (120).

9. An RFID reader (110), comprising:
a command generator (111) to generate an activation command for activating an RFID tag (120); and
a transmitter (112) to transmit the activation command to the RFID tag (120),
wherein the activation command includes reference state information of the RFID tag (120).

10. The RFID reader (110) of claim 9, wherein the reference state information includes information with respect to whether valid sensing data to be transmitted to the RFID reader (110) exists in sensing data stored in the RFID tag (120).

11. The RFID reader (110) of claim 9, wherein the reference state information includes error state information with respect to an error occurring in the RFID tag (120).

12. The RFID reader (110) of claim 9, wherein the reference state information is included in an activation mask within the activation command.

13. A method of controlling an RFID tag (120), comprising:
generating state information of the RFID tag (120);
receiving, from an RFID reader (110), an activation command including reference state information of the RFID tag (120); and
activating the RFID tag (120) based on the state information and the reference state information.

14. The method of claim 13, further comprising:
generating at least one sensing data by sensing an environmental factor around the RFID tag (120),
wherein the state information includes information with respect to whether valid sensing data to be transmitted to the RFID reader (110) exists in the at least one sensing data.

15. A method of controlling an RFID reader (110), comprising:
generating an activation command for activating an RFID tag (120); and
transmitting the activation command to the RFID tag (120),
wherein the activation command includes reference state information of the RFID tag (120).

## Patentansprüche

1. RFID-Etikett (120), umfassend:
einen Erzeuger für Zustandsinformation (126) zum Erzeugen von Zustandsinformation des RFID-Etiketts (120);
einen Empfänger (121) zum Empfangen einer Aktivierungsanweisung, welche Referenzzustandsinformation des RFID-Etiketts (120) enthält;
eine Steuereinheit (122) zum Aktivieren des RFID-Etiketts (120) basierend auf der Zustandsinformation und der Referenzzustandsinformation.

2. RFID-Etikett (120) nach Anspruch 1, wobei die Steuereinheit (122) dazu ausgelegt ist, das RFID-Etikett (120) zu aktivieren, wenn die Zustandsinformation mit der Referenzzustandsinformation übereinstimmt.

3. RFID-Etikett (120) nach Anspruch 1, ferner umfassend:
einen Sensor (123) zum Erzeugen von wenigstens einem Messdatum durch Messen einer Umgebungseinflussgröße um das RFID-Etikett (120),
wobei die Zustandsinformation Information mit Bezug darauf enthält, ob an einen RFID-Leser (110) zu sendende gültige Messdaten in dem wenigstens einem Messdatum vorhanden sind.

4. RFID-Etikett (120) nach Anspruch 3, wobei die Information mit Bezug darauf, ob gültige Messdaten vorhanden sind, basierend auf einem vorbestimmten Messdatenwert erzeugt ist.

5. RFID-Etikett (120) nach Anspruch 1, wobei die Zustandsinformation Fehlerzustandsinformation mit Bezug auf einen Fehler enthält, der in dem RFID-Etikett (120) auftritt.

6. RFID-Etikett (120) nach Anspruch 5, ferner umfassend eine Speichereinheit (125) zum Speichern der Messdaten,
wobei die Fehlerzustandsinformation Information mit Bezug auf eine verbleibende Kapazität der Speichereinheit (125) enthält.

7. RFID-Etikett (120) nach Anspruch 3, wobei die Zustandsinformation ein erstes Bit enthält, welches Information mit Bezug darauf repräsentiert, ob die gültigen Messdaten vorhanden sind, und auch ein zweites Bit enthält, welche die Fehlerzustandsinformation mit Bezug auf einen Fehler repräsentiert, der in dem RFID-Etikett (120) auftritt.

8. RFID-Etikett (120) nach Anspruch 1, wobei die Zustandsinformation in einem in dem RFID-Etikett (120) gespeicherten Aktivierungscode enthalten ist.

9. RFID-Leser (110) umfassend:
einen Anweisungserzeuger (111) zum Erzeugen einer Aktivierungsanweisung zum Aktivieren eines RFID-Etiketts (120); und
einen Sender (112) zum Senden der Aktivierungsanweisung an das RFID-Etikett (120),
wobei die Aktivierungsanweisung Referenzzustandsinformation des RFID-Etiketts (120) enthält.

10. RFID-Leser (110) nach Anspruch 9, wobei die Referenzzustandsinformation Information mit Bezug darauf enthält, ob an den RFID-Leser (110) zu sendende gültige Messdaten in Messdaten vorhanden sind, die in dem RFID-Etikett (120) gespeichert sind.

11. RFID-Leser (110) nach Anspruch 9, wobei die Referenzzustandsinformation Fehlerzustandsinformation mit Bezug auf einen Fehler enthält, welcher in dem RFID-Etikett (120) auftritt.

12. RFID-Leser (110) nach Anspruch 9, wobei die Referenzzustandsinformation in einer Aktivierungsmaske in der Aktivierungsanweisung enthalten ist.

13. Verfahren zum Steuern eines RFID-Etiketts (120), umfassend:
Erzeugen von Zustandsinformationen des RFID-Etiketts (120);
Empfangen einer Aktivierungsanweisung, die Referenzzustandsinformation des RFID-Etiketts (120) enthält, von einem RFID-Leser (110); und
Aktivieren des RFID-Etiketts (120) basierend auf der Zustandsinformation und der Referenzzustandsinformation.

14. Verfahren nach Anspruch 13, ferner umfassend:
Erzeugen von wenigstens einem Messdatum durch Messen einer Umgebungseinflussgröße um das RFID-Etikett (120),
wobei die Zustandsinformation Information mit Bezug darauf enthält, ob an den RFID-Leser (110) zu sendende gültige Messdaten in dem wenigstens einen Messdatum vorhanden sind.

15. Verfahren zum Steuern eines RFID-Lesers (110), umfassend:
Erzeugen einer Aktivierungsanweisung zum Aktivieren eines RFID-Etiketts (120); und
Senden der Aktivierungsanweisung an das RFID-Etikett (120),
wobei die Aktivierungsanweisung Referenzzustandsinformation des RFID-Etiketts (120) enthält.

## Revendications

1. Etiquette RFID (120), comprenant :
un générateur d'informations d'état (126) pour générer des informations d'état de l'étiquette RFID (120) ;
un récepteur (121) pour recevoir un ordre d'activation incluant des informations d'état de référence de l'étiquette RFID (120) ; et
une unité de commande (122) pour activer l'étiquette RFID (120) en se basant sur les informations d'état et les informations d'état de référence.

2. Etiquette RFID (120) selon la revendication 1, dans laquelle l'unité de commande (122) est adaptée pour activer l'étiquette RFID (120) lorsque les informations d'état concordent avec les informations d'état de référence.

3. Etiquette RFID (120) selon la revendication 1, comprenant en outre :
un capteur (123) pour générer au moins une donnée de détection en détectant un facteur environnemental autour de l'étiquette RFID (120),
dans laquelle les informations d'état incluent des informations pour savoir si des données de détection valides à transmettre à un lecteur RFID (110) existent ou non dans la au moins une donnée de détection.

4. Etiquette RFID (120) selon la revendication 3, dans laquelle les informations pour savoir si des données de détection valides existent ou non sont générées en se basant sur une valeur de données de détection prédéterminée.

5. Etiquette RFID (120) selon la revendication 1, dans laquelle les informations d'état incluent des informations d'état d'erreur par rapport à une erreur se produisant dans l'étiquette RFID (120).

6. Etiquette RFID (120) selon la revendication 5, comprenant en outre une unité de mémoire (125) pour stocker les données de détection,
dans laquelle les informations d'état d'erreur incluent des informations par rapport à une capacité restante de l'unité de mémoire (125).

7. Etiquette RFID (120) selon la revendication 3, dans laquelle les informations d'état incluent un premier bit représentant des informations pour savoir si les données de détection valides existent ou non et incluent également un second bit représentant les informations d'état d'erreur par rapport à une erreur se produisant dans l'étiquette RFID (120).

8. Etiquette RFID (120) selon la revendication 1, dans laquelle les informations d'état sont incluses dans un code d'activation stocké dans l'étiquette RFID (120).

9. Lecteur RFID (110), comprenant :
un générateur d'ordre (111) pour générer un ordre d'activation permettant d'activer une étiquette RFID (120) ; et
un transmetteur (112) pour transmettre l'ordre d'activation à l'étiquette RFID (120),
dans lequel l'ordre d'activation inclut des informations d'état de référence de l'étiquette RFID (120).

10. Lecteur RFID (110) selon la revendication 9, dans lequel les informations d'état de référence incluent des informations pour savoir si des données de détection valides à transmettre au lecteur RFID (110) existent ou non dans les données de détection stockées dans l'étiquette RFID (120).

11. Lecteur RFID (110) selon la revendication 9, dans lequel les informations d'état de référence incluent des informations d'état d'erreur par rapport à une erreur se produisant dans l'étiquette RFID (120).

12. Lecteur RFID (110) selon la revendication 9, dans lequel les informations d'état de référence sont incluses dans un masque d'activation au sein de l'ordre d'activation.

13. Procédé de commande d'une étiquette RFID (120), comprenant :
la génération d'informations d'état de l'étiquette RFID (120) ;
la réception, depuis un lecteur RFID (110), d'un ordre d'activation incluant des informations d'état de référence de l'étiquette RFID (120) ; et
l'activation de l'étiquette RFID (120) en se basant sur les informations d'état et les informations d'état de référence.

14. Procédé selon la revendication 13, comprenant en outre :
la génération d'au moins une donnée de détection en détectant un facteur environnemental autour de l'étiquette RFID (120),
dans lequel les informations d'état incluent des informations pour savoir si des données de détection valides à transmettre au lecteur RFID (110) existent ou non dans la au moins une donnée de détection.

15. Procédé de commande d'un lecteur RFID (110), comprenant :
la génération d'un ordre d'activation permettant d'activer une étiquette RFID (120) ; et
la transmission de l'ordre d'activation à l'étiquette RFID (120),
dans lequel l'ordre d'activation inclut des informations d'état de référence de l'étiquette RFID (120).
